# EUROPÄISCHE PATENTSCHRIFT

(11) **EP 0 614 049 B1**
(45) Veröffentlichungstag und Bekanntmachung des Hinweises auf die Patenterteilung: **20.11.1996**
(21) Anmeldenummer: 93114749.0
(22) Anmeldetag: 14.09.1993
(51) Int. Cl.: F23N 5/24, F23N 5/26, G05B 9/03

(54) **Spannungsversorgung für ein insb. redundantes Rechnersystem einer Steuereinrichtung**
Voltage supply for a redundant computer of a control device
Alimentation en tension pour un système d'ordinateur redondant d'un dispositif de commande

(30) Priorität: 05.03.1993 CH 663/93
(43) Veröffentlichungstag der Anmeldung: 07.09.1994
(73) Patentinhaber: Landis & Gyr Technology Innovation AG, 6301 Zug (CH)
(72) Erfinder: Paul, Jürgen, Dipl.-Ing., D-7513 Stutensee (DE); Pallek, Anton, Dipl.-Ing. (FH), D-7570 Baden-Baden (DE)
(74) Vertreter: Müller, Hans-Jürgen, Dipl.-Ing.

(56) Entgegenhaltungen:
- EP-A- 0 352 217
- EP-A- 0 397 913
- GB-A- 2 183 113

## Beschreibung

Die Erfindung bezieht sich auf eine Spannungsversorgung der im Oberbegriff des Anspruch 1 genannten Gattung sowie auf eine Verwendung derselben für Steuereinrichtungen von Brennern von Heizungsanlagen.

Es sind bereits redundante Rechnersysteme für kritische Systemsteuerungen bekannt, die ein hohes Maß an Sicherheit verlangen. Dazu werden normalerweise zwei vollparallele Steuerungen (Rechenwerk mit Stromversorgung und Signalwegen) verwendet. Auch "Zwei aus Drei"-Systeme, parallele Teilausführungen von einzelnen unzuverlässigeren Komponenten der Systeme oder hochgradig parallele Steuerungen für zu regelnde Anlagen sind bekannt. Der Aufwand der Sicherheitsmaßnahmen richtet sich im allgemeinen nach der Höhe des Risikos und des Schadens bei unkontrolliertem Ausfall des Systems sowie nach den entsprechenden Normen des Gesetzgebers.

Solche Rechnersysteme steuern z.B. den Brenner von Gasfeuerungsanlagen, aber auch Flugnavigationssysteme und ähnliches. Dabei erfolgt die Steuerung der Anlage durch zwei parallele Kanäle "sog. Zweikanalsysteme", d.h. mit zwei Netzgeräten, zwei Stromversorgungssteuerungen, zwei Rechnern und zwei parallelen Signalwegen. Der Ausfall eines der Systeme wird dadurch erkannt, daß die parallelen Rechner laufend die Prozeßdaten und ihre Berechnungen miteinander vergleichen. Weichen die Daten voneinander ab, ist eines der Systeme gestört oder ausgefallen und die Steuerung überführt den Ablauf der Steuereinrichtung in einen sicheren statischen Zustand. Liegt also ein Fehler vor, detektieren die Rechner diesen automatisch und schalten den Prozeß ab oder es findet eine andere sicherheitstechnische Einwirkung auf die Steuereinrichtung statt, die auch eine Regeleinrichtung im engeren Sinne sein kann.

Diese Lösung ist verhältnismäßig aufwendig, da das gesamte Steuerungssystem doppelt ausgeführt werden muß und insbesondere teure Komponenten, wie Netzgeräte, zweifach vorhanden sein müssen.

Der Erfindung liegt die Aufgabe zugrunde, den Aufwand ohne Einschränkung an Sicherheit zu reduzieren und die Spannungsversorgung für das System komponentenärmer zu gestalten.

Die Erfindung ist im Anspruch 1 beansprucht und in Unteransprüchen sowie der folgenden Beschreibung sind weitere Ausbildungen und Funktionen derselben beansprucht und beschrieben.

Nach der Erfindung reduziert sich der Aufwand für eine sichere und zuverlässige Spannungsversorgung erheblich, ohne die Anforderungen an Sicherheit und Zuverlässigkeit zu schmälern, indem statt zweier separater Netzgeräte für die beiden parallelen Rechner eine einzige, jedoch mit besonderen Merkmalen ausgestattete Netzteileinheit verwendet wird. Diese versorgt das gesamte Rechnersystem und gegebenenfalls auch die Steuer- bzw. Regeleinrichtung mit elektrischer Spannung und kann auch direkt auf Komponenten der geregelten Anlage einwirken. Die Netzteileinheit ist selbstüberwachend, steht in Verbindung zu beiden Rechnereinheiten und kommuniziert mit jedem derselben über Signalwege und gegebenenfalls Spannungsversorgungsleitungen. Durch die Erfindung wird nicht nur sichergestellt, daß übermäßige Netzspannungsschwankungen keinen Schaden anrichten können, sondern daß vor allem auch interne Versorgungsspannungsänderungen nicht zu unsicheren Zuständen führen, obwohl sich die Netzspannung im Rahmen hält.

Die Sicherheit dieses Systems ergibt sich aus mehreren unabhängigen Gesichtspunkten, die im folgenden charakterisiert sind:

Durch die Reduzierung an Bauelementen für die Spannungsversorgung dadurch, daß nur mehr eine, allerdings geringfügig erweiterte zum Einsatz kommt, reduziert sich auch die Anzahl an Bauelementausfällen, die statistisch verteilt sind und direkt proportional mit der Anzahl der Bauelemente selbst ansteigen. Die selbstüberwachende Netzteileinheit weist je einen Unterspannungswächter und einen Überspannungswächter sowie das Netzteil selbst auf, das die Versorgungsspannung regelt.

Ein Verriegelungsflipflop kann als zusätzliche Einrichtung bei einer Störabschaltung das ungewollte automatische Wiedereinschalten des Systems verhindern und verlangt dann z.B. die manuelle Bestätigung der Störabschaltung; es kann erst nach einem Acknowledge-Signal auf manueller Ebene des Bedieners deaktiviert werden. Dadurch wird bei erfolgreicher Abschaltung im Störfall der oftmals gewollte automatische Wiedereintritt und in diesem Fall der instabile Systemzustand vermieden.

Der Über- und der Unterspannungswächter überprüfen, ob die Spannung der Netzteileinheit während des Betriebes in einem bestimmten Sollbereich bleibt, um Fehler in den mit der Spannung des Netzteils gespeisten Rechnern zu vermeiden. Dieser Sollbereich liegt symmetrisch zum Sollwert der Spannung von z.B. 5V, es kann jedoch auch jeder beliebig andere Wert durch Variation der Bauelemente (Spannungsteilerschaltung zur Festlegung des Basisstroms eines Transistors) eingestellt werden. Dadurch werden Spannungsfehler bereits hardwaremäßig in der Spannungsversorgung erkannt und es wird die Versorgungsspannung insb. sämtlicher Relais der Steuereinrichtung abgeschaltet, so daß alle Ausgänge wichtiger Steueraggregate, wie eines Gasventils bei Gasbrennern, spannungslos werden und in den sicheren Zustand gelangen, hier den Zutritt von Brenngas zum Brenner abschalten.

Durch diese Maßnahme garantiert die Schaltung eine sichere Detektion von "externen" Fehlern und Störungen und das zuverlässige sicherheitstechnische Abschalten der Anlage direkt durch das Abschalten der Versorgungsspannung der Relais der Steuereinrichtung. Gleichzeitig kann eine Meldung an die Rechner erfolgen, die jedoch je nach Art des Fehlers nur mehr bedingt einsatzfähig sind.

Nach einer besonderen Ausbildung der Erfindung verfügt die Spannungsversorgung, also die selbstüberwachende Netzteileinheit, zudem noch über die Eigenschaft, Fehler im Inneren der Spannungswächerschaltung zu detektieren und im Falle eines Fehlers eine sicherheitstechnische Einwirkung, z.B. eine Abschaltung, vorzunehmen, da ja in diesem Falle ein sicheres Abschalten bei Über- oder Unterspannung durch den Ausfall der zuständigen Überwachungseinrichtung nicht mehr garantiert werden kann. Das Testen der Spannungswächterschaltungen übernehmen die Rechnereinheiten per Software insb. dadurch, daß sie an die Schaltung über einen Über- und einen Unterspannungstesteingang ein Testsignal anlegen. Es wird der Fehlerfall simuliert, indem das Testsignal den Spannungswächtern eine Über- bzw. Unterspannung vortäuscht. Die Wächter sprechen daraufhin an und melden dies der Rechnereinheit, die das Testsignal sofort wieder deaktiviert. Die Zeitspanne zwischen Anlegen des Signals und dessen Deaktivierung ist so kurz bemessen, daß die entsprechenden Relais in den Sicherheitskreisen der Anlage noch nicht abfallen, d.h. daß die entsprechenden Routinen bei "wirklicher" Über- oder Unterspannung nicht aktiviert werden. Unterbleibt jedoch die Meldung, so weiß die Rechnereinheit, daß der entsprechende Wächter ausgefallen ist, schaltet die Anlage ab und signalisiert dem Bediener durch eine Anzeige möglichst auch den Grund und den Ort des Fehlers.

Nach einer besonderen Ausbildung der Erfindung wird diese Spannungsversorgung für die Steuer- bzw. Regeleinrichtung für Brenner von Heizungsanlagen oder dergleichen verwendet, ohne auf diese Anwendung beschränkt zu sein. Dies ist deshalb sehr wichtig, da besonders bei kleineren Brennern mit Leistungen bis etwa 30 KW für Einfamilienhäusern oder Etagenwohnungen die Kostenfrage des Netzgerätes bei doppelter Ausführung eine erhebliche Rolle spielt, die Sicherheit und Zuverlässigkeit jedoch auch hier gewährleistet sein muß. Tritt ein Fehler z.B. im Gasventil und dem Gebläse auf, so wird dieser über die parallelen Rechnereinheiten, die sich gegenseitig überwachen, abgefangen. Tritt dagegen ein Fehler in der einzigen Spannungsversorgung selbst auf und führt deswegen in beiden Rechnereinheiten zu falschen Ergebnissen, so daß diese den Fehler nicht selbst detektieren oder nicht mehr funktionsfähig sind, so wird dieser über die selbstüberwachende Netzteileinheit abgefangen. Diese wirkt z.B. direkt über Relais auf den Brenner (z.B. schließt sie die Gasventile) und verhindert dadurch den unsicheren Zustand.

Eine solche selbstüberwachende Netzteileinheit dient besonders vorteilhaft für die Spannungsversorgung von zwei insb. redundanten Rechnereinheiten zur Steuerung von Feuerungsanlagen, da sie kostengünstig ist und trotzdem die Normanforderungen für derartige Anlagen erfüllt.

In der folgenden Beschreibung und anhand der Zeichnung werden besonders bevorzugte Ausführungsbeispiele hierfür erörtert. Dabei zeigt:
- Fig. 1: einen schematischen Überblick über wichtige Systemkomponenten und deren Beziehungen untereinander in Verbindung mit einer Steuereinrichtung für einen Gasfeuerungsautomaten;
- Fig. 2: einen schematischen Schaltplan des Über- und Unterspannungswächters als Teilkomponenten der selbstüberwachenden Netzteileinheit;
- Fig. 3: ein Spannungs-Zeit-Diagramm zur Veranschaulichung der Sicherheitsaktionen bei Eintritt der erwarteten Fehler und
- Fig. 4: einen schematischen Schaltplan einer bevorzugten Ausbildung der Spannungswächter in einer selbstüberwachenden Netzteileinheit.

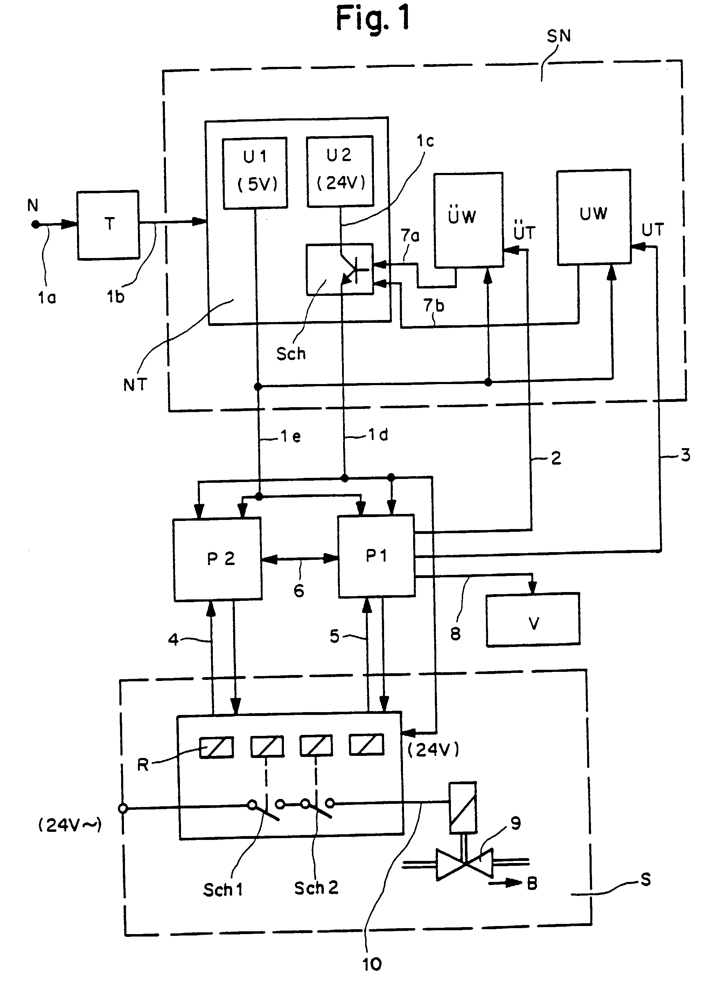

Gemäß Fig. 1 speist das Netz N über die Netz-Anschlußleitung la den Transformator T mit einer Netz-Wechselspannung von z.B. 230 V. Die transformierte Niederspannung von z.B. 24 V gelangt über die Versorgungsleitung 1b zur selbstüberwachenden Netzteileinheit SN mit dem Netzteil NT, dem Überspannungswächter ÜW, dem Unterspannungswächter UW und über die Versorgungsleitung lc zum Schalter Sch. Das Netzteil NT sorgt für die Glättung der Wechselspannung, deren Gleichrichtung, Regelung auf 5V-Spannung U1 und Stabilisierung auf 24V-Spannung U2 und Tiefpaßfilterung, um hochfrequente Störungen, die trotz Entkopplung durch den Transformator T existieren, herauszufiltern. Der Über- und Unterspannungswächter ÜW, UW überwachen die geregelten Spannung U1 in einem einstellbaren Intervall um einen bestimmten Sollwert von hier 5 V. Ein Absinken oder ein Ansteigen über die Soll-Intervallgrenze hinweg führt zur direkten Abschaltung der Anlage über die Spannungsversorgungsleitung ld in der elektrischen Leitung 10 der Steuereinrichtung S.

Die Rechnereinheiten P1, P2 überprüfen die Funktionstüchtigkeit der Über- und Unterspannungswächter ÜW, UW zyklisch mindestens einmal in 24 Stunden über den Signalweg 1e, was jedoch auch von nur einer der Rechnereinheiten P1, P2 oder abwechselnd durchgeführt werden kann. Detektieren diese einen Fehler in den Spannungswächtern ÜW, UW der selbstüberwachenden Netzteileinheit SN, so zeigen sie dies über die Signalleitung 8 auch im Anzeigegerät V an, wo auch die Ursache für die Abschaltung kenntlich gemacht werden kann.

Beide Rechnereinheiten P1, P2 steuern bzw. regeln den Prozess z.B. in der die Relais R aufweisenden Stufe der Steuereinrichtung S und erhalten Signalwerte und Prozeßzustandsgrößen von dort rückgekoppelt über die Signalleitungen 4,5. Durch "parallele" Verarbeitung dieser Werte erhalten sie unabhängig voneinander eigenständige Werte und können diese zusätzlich über die Datenaustauschleitung 6 auf Konformität vergleichen. Bei falschen Signalwerten und bei Diskrepanzen schalten sie als sicherheitstechnische Maßnahme z.B. den Prozeß ab bzw. die Leitung 10 aus.

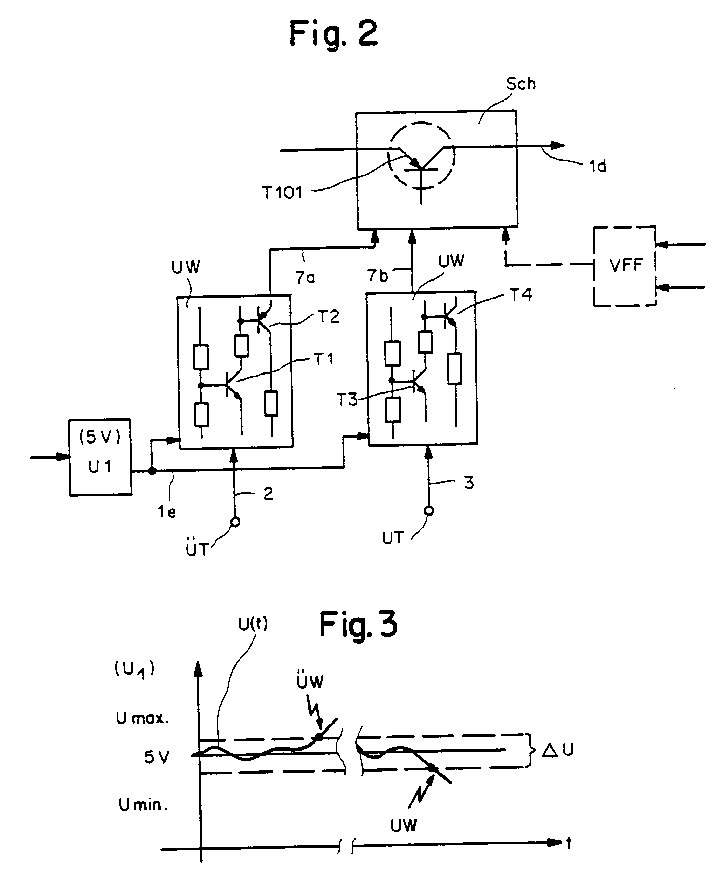

Fällt die Spannung (Unterspannung) aus oder kommt es zur Überspannung und ist der sichere Betrieb der Rechnereinheiten P1, P2 nicht mehr gewährleistet, so übernimmt die Netzteileinheit SN eigenständig die Abschaltung des Prozesses bzw. der Relais R. Dies geschieht über die interne Struktur der Spannungsversorgungsschaltung, z.B. gemäß Figur 2. Bei dem bevorzugten Anwendungsbeispiel Von Fig. 2 ist die Wirkungsweise der Spannungswächter UW, ÜW schematisch dargestellt. Sowohl der Unterspannungswächter UW als auch der Überspannungswächter ÜW sind in Transistor-Logik aufgebaut; sie überwachen die geregelte Spannung U1 des Netzteils NT. Dabei werden Transistoren T1, T2, T3, T4 über eine Spannungsteilerschaltung angesteuert. Bei dem Überspannungswächter ÜW schaltet der entsprechende Transistor T1 bei Überschreiten eines bestimmten oberen Sollwerts eines Intervalls um den Referenz- bzw. Sollwert den Kollektorstrom durch; er wird am Ausgang niederohmig. Der höhere Strom veranlaßt den als Schalter Sch dienenden Haupttransistor T101 zum Abschalten, so daß in der Versorgungsleitung 1d kein Strom mehr fließt und dadurch alle Relais R in der Steuereinrichtung zum Abfall kommen. Hierdurch werden die entsprechenden Sicherheitsvorkehrungen aktiviert, hier das Gasventil 9 für den Brenner B der Gasfeuerungsanlage und die Zündung spannungslos, so daß auch der Zutritt von Brenngas zum Brenner B abgeschaltet wird.

Bei dem Unterspannungswächter UW wird bei Unterschreiten der Spannung unter den unteren Sollwert des Intervalls der Transistor T3 am Ausgang hochohmig. Das sperrt den Transistor T4, der folglich hochohmig wird und dadurch den als Schalter Sch dienenden Haupttransistor T101 sperrt, der das entsprechende Relais R abwirft. Beide Spannungswächter ÜW, UW verfügen zudem über einen Unterspannungstesteingang UT bzw. einen Überspannungstesteingang ÜT, durch die die Rechnereinheiten P1, P2 die entsprechenden Tests auf Eigenfehler durchführen können. Beide Wächter UW, ÜW können mit einem Verriegelungsflipflop VFF und dem Netzteil NT auf einer Platine integriert sein.

Gemäß Fig. 3 wird die Spannung U(t) in Abhängigkeit von der Zeit t überwacht. Es existiert ein einstellbares Intervall um einen speziellen Referenz- bzw. Sollwert von z.B. 5 V, abgeschlossen durch die obere Schwellenspannung Umax mit z.B. 6V als oberem Sollwert und die untere Schwellenspannung Umin mit z.B. 4V als unterem Sollwert. Die obere Schwellenspannung Umax weicht um die Spannungsdifferenz ΔU von z.B. 2 V von der unteren Schwellenspannung Umin ab. Überschreitet die Spannung, die im angegebenen Intervall schwanken kann, die obere Schwellenspannung Umax, so spricht der Überspannungswächter ÜW an und aktiviert die Sicherheitsabschaltung des Schalters Sch bzw. Transistors T101. Ebenso verhält sich der Unterspannungswächter UW bei Unterschreiten der unteren Schwellenspannung Umin.

Das als Zusatzeinrichtung verwendete Verriegelungsflipflop VFF in der selbstüberwachenden Netzteileinheit SN verhindert nach erfolgter Störabschaltung beispielsweise im Schalter Sch das automatische Wiedereinschalten der Steuereinrichtung S. Erlischt beispielsweise die Flamme im Brenner, so versucht die Steuerung zunächst, die Flamme automatisch wieder zu zünden, ehe eine Störabschaltung erfolgt. Liegt aber ein "Störfall" aufgrund einer nur kurzzeitigen Spannungsunter- oder überschreitung vor und liegt die geregelte Spannung U1 innerhalb kurzer Zeit wieder innerhalb des gewünschten Spannungsintervalls, das sich in Fig. 3 innerhalb der Differenzspannung ΔU befindet, so verhindert das Verriegelungsflipflop VFF in jedem Fall den Wiedereintritt der Heizungsanlage in den Normalbetrieb solange, bis die Bedienungsperson, die durch die Anzeigeeinrichtung V aufmerksam gemacht wurde, nach Überprüfung der Anlage die Steuerung reaktiviert.

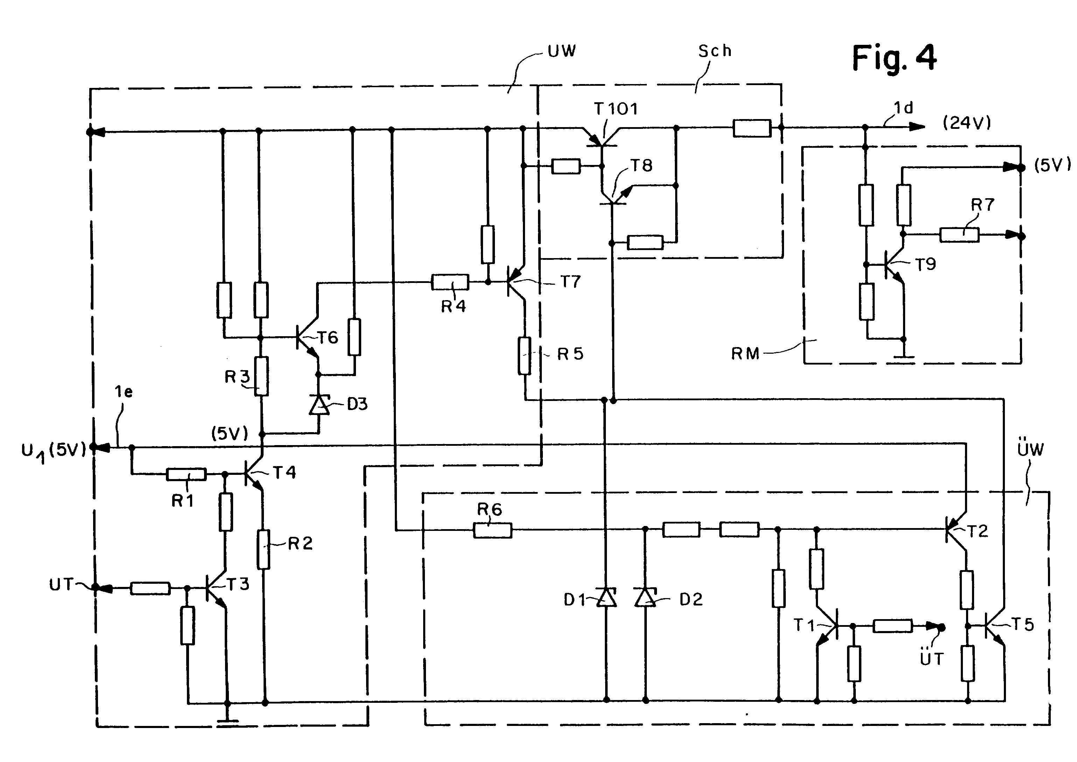

In Figur 4 ist die schaltungsmäßige Verknüpfung des Unterspannungswächters UW und des Überspannungswächters ÜW mit dem Schalter Sch schematisch dargestellt. Dazu wird folgendes erläuternd ausgeführt:

Der Unterspannungswächter UW für die Spannung U1 von hier 5V für die beiden Rechnereinheiten P 1, P2 ist so ausgelegt, daß Spannungen die niedriger als eine untere Schwellenspannung Uₘᵢₙ von z.B. 4V (worst-case) sind, detektiert werden. An der Basis des Transistors T4 steht die volle zu überwachende Spannung U1; dabei sperrt der Transistor T3, wenn elektrischer Strom durch den Widerstand R1 vernachlässigt wird. Die zu überwachende Spannung U1 wird dann durch den Widerstand R2 stromgewandelt und dieser Strom fließt in den Kollektorkreis des Transistors T4 und gelangt dann zur Auswerteschaltung, welche den Spannungsanfall am Widerstand R3 mit der Zener-Diodenspannung der Diode D3 als Referenz vergleicht. Es findet eine Potentialwandlung mit nachfolgendem Vergleich mit einer Referenzspannung statt. Liegt die zu überwachende Spannung U1 innerhalb des erlaubten Toleranzbereichs ΔU (Fig. 3), schaltet der Transistor T6 durch, was seinerseits zum Durchschalten des Transistors T7 führt. Dieser Transistor T7 schaltet den Strom für die Zener-Diode D1 und die Ausgangsspannung wird in Abhängigkeit von der Spannung an der Zener-Diode stabilisiert. Die Spannung von bei diesem Beispiel 24V auf der Leitung 1d wird nur dann freigegeben, wenn die zu überwachende Spannung U1 oberhalb des unteren Schwellenspannungswertes Uₘᵢₙ liegt. Andernfalls erfolgt eine Abschaltung.

Zum Testen der Funktionsfähigkeit des Unterspannungswächters UW bzgl. Stuck-at-Fehler wird ein Testimpuls von der Recheneinheit P1 auf den Transistor T3 für einen kurzen Zeitraum von etwa 0,3 ms angelegt. Dadurch wird die zu überwachende Spannung U1 vom Normalwert von hier 5V auf z.B. 3,5V an der Basis des Transistors T4 vermindert, so daß es zur Abschaltung der Spannung von 24V über den Schalter Sch kommt. Die Rückmeldung über den Transistor T9, den Widerstand R7 und den entsprechenden elektrischen Bauelementen wird dann durch die Rechnereinheit P1 ausgewertet.

Auch der Überspannungswächter ÜW ist hier auf eine Versorgungsspannung U1 für die Rechnereinheiten P1, P2 von 5V ausgelegt. Hier werden Spannungen von mehr als dem oberen Schwellenspannungswert Uₘₐₓ von 6V detektiert. Treten solche höheren Spannungen auf, wird die Relaisspannung, d.h. die Spannung von hier 24V auf der Versorgungsleitung 1d abgeschaltet, so daß jedenfalls einer der Schalter Sch1 bzw. Sch2 innerhalb der Relaisgruppe R der Steuereinrichtung S (Fig. 1) abfällt und das Gasventil 9 absperrt.

Der Transistor T1 vergleicht die zu überwachende Schaltung mit einer Referenzspannung, welche über den Widerstand R6 und die Zener-Diode D2 mit nachfolgenden Spannungsteiler gebildet wird. An der Basis des Transistors T2 stellt sich bei nicht angesteuerten Transistor T1 eine Spannung von ca. 5V. Steigt die zu überwachende Spannung U1 dagegen über 6V an, so wird der Transistor T2 durchgesteuert. Hierdurch wird der Transistor T5 durchgesteuert; er schließt die Zener-Diode D1 kurz und erreicht, daß der Schalter Sch die Relaisspannung auf der Versorgungsleitung 1d abschaltet.

Um auch hier die Funktionsfähigkeit des Überspannungswächters ÜW auf Stuck-at-Fehler zu testen, wird von der Rechnereinheit P1 ein Testimpuls von wiederum etwa nur 0,3 ms auf den Transistor T1 gegeben. Dadurch wird die Referenzspannung soweit verkleinert, daß der Trnsistor T2 durchsteuert und hierdurch die Relaisspannung für kurze Zeit abschaltet. Die Rückmeldung über den Transistor T7, den Widerstand R7 und entsprechende Bauelemente wird dann wiederum von der Rechnereinheit P1 ausgewertet.

Die Stabilisierung der Spannung von 24V auf der Versorgungsleitung 1D erfolgt durch die Transistoren T8 und T101, welche auf die Zener-Diodenspannung von 24V stabilisieren, welche die Referenzspannung bildet. Der Vorstrom für den Transistor D8 und die Zener-Diode wird über den Widerstand R 5 und den durchgeschalteten Transistor T7 zur Verfügung gestellt. Diese die Transistoren T8, T101 enthaltende Stufe wird bei Überspannung und Unterspannung auch als Schalter Sch verwendet.

Wie schon dargelegt, erfolgt die Rückmeldung darüber, ob die Versorgungsspannung auf der Versorgungsleitung 1d von 24V "vorhanden" oder "nicht-vorhanden" ist, durch die Rückmeldeschaltung RM mit Hilfe des Transistors T9, der bei Vorhandensein der Spannung von 24V ein Low-Signal von beispielsweise 0V an die Rechnereinheit P1 liefert, während beim Fehlen der Versorgungsspannung von 24V an der Versorgungsleitung 1d ein High-Signal von beispielsweise 5V an die Rechnereinheit 1 rückgemeldet wird.

Bei der erfindungsgemäßen Spannungsversorgung ist daher im Netzteil NT ein Konstantspannungs-Regler (U1) für eine Spannung von hier 5V für die Rechnereinheiten P1 und P2 sowie eine Stabilisierungsschaltung für die Relaisversorgungsspannung U2 von 24V enthalten. Darüber hinaus weist die selbstüberwachende Netzteileinheit SN den Überspannungswächter ÜW und den Unterspannungswächter UW jeweils mit den Testeingängen UT bzw. ÜT von der Rechnereinheit P1 auf. Schließlich ist eine Rückmeldeschaltung RM vorhanden, welche der Rechnereinheit P1 signalisiert, ob die Relaisversorgungsspannung U2 vorhanden ist oder fehlt.

Hierdurch wird das sichere Verhalten der Steuereinrichtung, beispielsweise eines Feuerungsautomaten für insbesondere Gasbrenner gewährleistet, obwohl die Erfindung beispielsweise auch bei mit Ölbrennern ausgerüsteten Feuerungsautomaten anwendbar ist. Da keine zweikanalige Spannungsversorgung für die Rechnereinheiten P1, P2 erforderlich ist, können erhebliche Kosten gespart werden, obwohl die Versorgungsspannung U2 der Relais R abgeschaltet, d.h. sicherheitstechnisch auf die Steuereinrichtung S eingewirkt wird, wenn die geregelte Spannung U1 für die Rechnereinheiten P1, P2 sich außerhalb eines gewünschten Bereichs befindet. Da auch der Überspannungswächter ÜW und der Unterspannungswächter UW auf korrekte Funktion überprüft werden, ist es möglich, sämtliche Stuck-at-Fehler, welche die sichere Funktion der Steuereinrichtung nicht mehr gewährleisten, zu erkennen.

## Patentansprüche

1. Spannungsversorgung für ein Rechnersystem einer Steuereinrichtung, bei der Rechnereinheiten parallel an die Steuereinrichtung angeschlossen sind und eine Überprüfung der Rechnereinheiten erfolgt, bei der bei Fehlverhalten eine sicherheitstechnische Einwirkung auf die Steuereinrichtung stattfindet, und bei der ein Netzteil zur Spannungsversorgung verwendet ist,
**dadurch gekennzeichnet**,
daß die parallelen Rechnereinheiten (P1, P2) über eine Spannungsversorgungsleitung (le) an eine einzige selbstüberwachende Netzteileinheit (SN) als gemeinsame Spannungsversorgung angeschlossen sind, deren Netzteil (NT) mit einem Überspannungswächter (ÜW) und mit einem Unterspannungswächter (UW) derart zusammenwirkt, daß bei Überspannung und/oder Unterspannung eine eigenständige sicherheitstechnische Einwirkung auf die Steuereinrichtung (S) erfolgt.

2. Spannungsversorgung nach Anspruch 1,
**dadurch gekennzeichnet**,
daß die Steuereinrichtung (S) mit Relais (R) ausgerüstet ist.

3. Spannungsversorgung nach Anspruch 1 oder 2,
**dadurch gekennzeichnet**,
daß der Netzteil (NT) und die Überspannungs- und Unterspannungswächter (ÜW, UW) auf einen Schalter (Sch) einwirken, der bei Fehlverhalten die Spannungsversorgung zu der Steuereinrichtung bzw. den Relais (R) über die Versorgungsleitung (1d) abschaltet.

4. Spannungsversorgung nach Anspruch 3,
**dadurch gekennzeichnet**,
daß ein Transistorschalter (T 101) als Schalter (Sch) verwendet ist.

5. Spannungsversorgung nach einem der vorhergehenden Ansprüche
**dadurch gekennzeichnet**,
daß ein Verriegelungsflipflop (VFF) nach dem sicherheitstechnischen Einwirken die unbeabsichtigte Wiederinbetriebsetzung der Steuereinrichtung bzw. der Relais (R) verhindert.

6. Spannungsversorgung nach einem der vorhergehenden Ansprüchen,
**dadurch gekennzeichnet**,
daß eine Abfrageeinrichtung kurzzeitig Testspannungsimpulse über Testeingänge (ÜT, UT) an die Überspannungs- und Unterspannungswächter (ÜW, UW) anlegt, um Über- bzw. Unterspannung zu simulieren und das Ansprechen des Schalters (Sch) zu testen, ohne daß die Testzeit dazu ausreicht, die sicherheitstechnische Einwirkung auszuführen.

7. Spannungsversorgung nach Anspruch 6,
**dadurch gekennzeichnet**,
daß eine Rechnereinheit (P1) in Form eines Mikroprozessors die Abfrageeinrichtung bildet.

8. Spannungsversorgung nach einem der vorhergehenden Ansprüche,
**dadurch gekennzeichnet**,
daß die Differenzspannung (Δ U) zwischen einer oberen Schwellenspannung (Umax) und einer unteren Schwellenspannung (Umin) zwischen 10 und 30 % der geregelten Spannung (U1) der Rechnereinheiten (P1, P2) beträgt.

9. Spannungsversorgung nach einem der vorhergehenden Ansprüche,
**dadurch gekennzeichnet**,
daß eine Rückmeldeschaltung (RM) das Vorhandensein bzw. Nichtvorhandensein der Versorgungsspannung (U2) für die Einwirkung auf die Steuereinrichtung (S) bzw. das/die Relais (R) ermittelt und an mindestens eine der Rechnereinheiten (Pl, P2) meldet.

10. Spannungsversorgung nach einem der vorhergehenden Ansprüche,
**dadurch gekennzeichnet**,
daß die Netzteileinheit (SN) über die elektrische Versorgungsleitung (ld) mit höchster Priorität sicherheitstechnisch direkt auf die Steuereinrichtung bzw. die Relais (R) einwirkt.

11. Verwendung der Spannungsversorgung nach einem der vorhergehenden Ansprüche für eine Steuer- bzw. Regeleinrichtung für Brenner von Heizungsanlagen geringer Leistung von bis zu etwa 50 KW mit der Maßgabe, daß die Netzteileinheit (SN) als Rechnereinheiten (P1, P2) dienende Mikrocomputer sich selbst überwachend mit Spannung versorgt, welche zusätzlich in eine Regelschaltung für die Brennersteuerung bzw. -regelung integriert sind.

12. Verwendung nach Anspruch 11,
**gekennzeichnet durch**
die Abschaltung der kritischen Systemkomponenten, wie Gasventil (9), durch die selbstüberwachende Netzteileinheit (SN) selbst mit der Maßgabe, daß diese direkt auf entsprechende Relais (R) der Steuereinrichtung unter Umgehung von Rechnereinheiten (P1, P2) einwirkt.

## Claims

1. A voltage supply for a computer system of a control device in which computer units are connected in parallel to the control device and testing of the computer units is effected, in which in the event of malfunctioning there is a safety-procedural action on the control device, and in which a mains portion is used for the voltage supply, characterised in that the parallel computer units (P1, P2) are connected by way of a voltage supply line (le) to a single self-monitoring mains portion unit (SN) as the common voltage supply, the mains portion (NT) thereof co-operating with an overvoltage monitor (ÜW) and with an undervoltage monitor (UW) in such a way that in the event of an overvoltage and/or undervoltage an independent safety-procedural action on the control device (S) occurs.

2. A voltage supply according to claim 1 characterised in that the control device (S) is equipped with relays (R).

3. A voltage supply according to claim 1 or claim 2 characterised in that the mains portion (NT) and the overvoltage and undervoltage monitors (ÜW, UW) act on a switch (Sch) which in the event of malfunctioning switches off the voltage supply to the control device or the relays (R) by way of the supply line (ld).

4. A voltage supply according to claim 3 characterised in that a transistor switch (T101) is used as the switch (Sch).

5. A voltage supply according to one of the preceding claims characterised in that after the safety-procedural action a locking flip-flop (VFF) prevents unintentional restoration to operation of the control device or the relays (R).

6. A voltage supply according to one of the preceding claims characterised in that an interrogation device applies test voltage pulses to the overvoltage and undervoltage monitors (ÜW, UW) by way of test inputs (ÜT, UT) for a short time in order to simulate overvoltage and undervoltage respectively and to test the response of the switch (Sch) without the test time being sufficient to produce the safety-procedural action.

7. A voltage supply according to claim 6 characterised in that a computer unit (P1) in the form of a microprocessor forms the interrogation device.

8. A voltage supply according to one of the preceding claims characterised in that the difference voltage (ΔU) between an upper threshold voltage (Umax) and a lower threshold voltage (Umin) is between 10 and 30% of the regulated voltage (U1) of the computer units (P1, P2).

9. A voltage supply according to one of the preceding claims characterised in that a signal-back circuit (RM) detects the presence or absence of the supply voltage (U2) for the action on the control device (S) or the relay or relays (R) and signals same to at least one of the computer units (P1, P2).

10. A voltage supply according to one of the preceding claims characterised in that the mains portion unit (SN) produces the safety-procedural action directly on the control device or the relays (R) by way of the electrical supply line (d) with highest priority.

11. Use of the voltage supply according to one of the preceding claims for a control or regulating device for burners of heating installations of low output of up to about 50 KW with the proviso that the mains portion unit (SN) supplies voltage to microcomputers serving as computer units (P1, P2) with self-monitoring, which are additionally integrated into a regulating circuit for the burner control or regulation.

12. Use according to claim 11 characterised by the shut-down of the critical system components such as a gas valve (9) by the self-monitoring mains portion unit (SN) itself with the proviso that it acts directly on corresponding relays (R) of the control device, by-passing computer units (P1, P2).

## Revendications

1. Alimentation en tension pour un système de calculateurs d'un dispositif de commande, dans lequel des unités de calculateurs sont connectées en parallèle au dispositif de commande et une vérification des unités de calculateurs est effectuée, un comportement défectueux produisant une action de sécurité sur le dispositif de commande, et dans lequel un bloc secteur est utilisé pour l'alimentation en tension,
caractérisée en ce que les unités de calculateurs (P1, P2) parallèles sont connectées par une ligne d'alimentation en tension (le) à une seule unité de bloc secteur (SN) à autosurveillance, servant d'alimentation en tension collective, dont le bloc secteur (NT) coopère avec un contrôleur de surtension (ÜW) et un contrôleur de sous-tension (UW), de manière que s'il se produit une surtension et/ou une sous-tension, une action autonome de sécurité soit exercée sur le dispositif de commande (S).

2. Alimentation en tension selon la revendication 1, caractérisée en ce que le dispositif de commande (S) est équipé de relais (R).

3. Alimentation en tension selon la revendication 1 ou 2, caractérisée en ce que le bloc secteur (NT) et les contrôleurs de surtension et de sous-tension (ÜW, UW) agissent sur un interrupteur (Sch) qui, dans le cas d'un comportement défecteux, coupe l'alimentation en tension du dispositif de commande ou des relais (R) par la ligne d'alimentation (1d).

4. Alimentation en tension selon la revendication 3, caractérisée en ce qu'un interrupteur à transistor (T101) est utilisé en tant qu'interrupteur (Sch).

5. Alimentation en tension selon une des revendications précédentes, caractérisée en ce que, à la suite de l'action de sécurité, une bascule de verrouillage (VFF) empêche la remise en service involontaire du dispositif de commande ou des relais (R).

6. Alimentation en tension selon une des revendications précédentes, caractérisée en ce qu'un dispositif d'interrogation applique brièvement des impulsions de tension de test à travers des entrées de test (ÜT, UT) aux contrôleurs de surtension et de sous-tension (ÜW, UW) afin de simuler une surtension ou une sous-tension et de tester la réaction de l'interrupteur (Sch), sans que la durée du test soit suffisante pour que l'action de sécurité puisse être exercée.

7. Alimentation en tension selon la revendication 6, caractérisée en ce que le dispositif d'interrogation est constitué par une unité de calculateur (P1) sous la forme d'un microprocesseur.

8. Alimentation en tension selon une des revendications précédentes, caractérisée en ce que la différence de tension (ΔU) entre une tension de seuil supérieure (Umax) et une tension de seuil inférieure (Umin) est comprise entre 10 et 30 % de la tension régulée (U1) des unités de calculateurs (P1, P2).

9. Alimentation en tension selon une des revendications précédentes, caractérisée en ce qu'un circuit de signalisation de retour (RM) détermine la présence ou l'absence de la tension d'alimentation (U2) servant à l'action éventuellement à exercer sur le dispositif de commande (S) ou sur le ou les relais (R) et signale cette présence ou cette absence à au moins l'une des unités de calculateurs (P1, P2).

10. Alimentation en tension selon une des revendications précédentes, caractérisée en ce que l'unité de bloc secteur (SN) exerce l'action de sécurité directement, avec la plus haute priorité, sur le dispositif de commande ou les relais (R) par la ligne d'alimentation électrique (1d).

11. Utilisation de l'alimentation en tension selon une des revendications précédentes pour un dispositif de commande ou de réglage destiné à des brûleurs d'installations de chauffage de puissance relativement faible, pouvant aller jusqu'à 50 kW environ, l'unité de bloc secteur (SN), se surveillant elle-même, alimentant en tension des micro-ordinateurs servant d'unités de calculateurs (P1, P2) et qui sont intégrés en plus dans un circuit de réglage pour la commande ou la régulation du ou des brûleurs.

12. Utilisation selon la revendication 11, caractérisée par l'arrêt des composants critiques du système, tels qu'une vanne de gaz (9), par l'unité de bloc secteur (SN) à autosurveillance elle-même, en ce sens que cette unité agit directement sur des relais (R) correspondants du dispositif de commande, avec contournement d'unités de calculateurs (P1, P2).
